# EUROPEAN PATENT SPECIFICATION

(11) **EP 4 106 533 B1**
(45) Date of publication and mention of the grant of the patent: **31.12.2025**
(21) Application number: 21706554.9
(22) Date of filing: 17.02.2021
(51) Int. Cl.: A23C 11/00, A23C 11/02, A23F 5/38, A23F 5/40, A23L 2/39, A23L 2/52

(54) **A COMPOSITION FOR FORMING A BEVERAGE**
ZUSAMMENSETZUNG ZUR HERSTELLUNG EINES GETRÄNKS
COMPOSITION POUR FORMATION D'UNE BOISSON

(30) Priority: 17.02.2020 GB 202002150
(43) Date of publication of application: 28.12.2022
(73) Proprietor: Koninklijke Douwe Egberts B.V., 3532 AD Utrecht (NL)
(72) Inventor: CANTONI, Maria Cielo, 3532 AD Utrecht (NL); STEENHOF, Vincent Jan, 3532 AD Utrecht (NL)
(74) Representative: Boult Wade Tennant LLP
(86) International application number: PCT/EP2021/053900
(87) International publication number: WO 2021/165328

(56) References cited:
- US-A1- 2018 007 935
- ANONYMOUS: "Nescafe Gold Oat Latte (6X16g) Gb - Tesco Groceries", 28 January 2020 (2020-01-28), XP055795047, Retrieved from the Internet <URL:https://www.tesco.com/groceries/en-GB/products/304264942> [retrieved on 20210414]
- ANONYMOUS: "Nestlé launches plant-based latte coffees in the UK and Ireland | Nestlé", 7 August 2019 (2019-08-07), XP055795158, Retrieved from the Internet <URL:https://www.nestle.co.uk/en-gb/media/pressreleases/allpressreleases/nestlé-launches-plant-based-latte-coffees-uk-ireland> [retrieved on 20210414]

## Description

This disclosure relates to a composition for forming a beverage and, in particular, to an alternative to a dairy-based whitened coffee composition. The composition includes a plant-based powder as the protein source, rather than relying on dairy proteins.

A number of alternatives to dairy ingredients are well known. Particularly in recent years, consumers have been seeking out vegan products and the prevalence of different "milk" products, such as almond milk or soy milk, is increasing. These products are seen as desirable because they avoid dairy ingredients, and also because the products avoid the risks for some consumers associated with dairy ingredients and the allergens therein, such as lactose.

However, it is not a straight-forward matter to replace a milk powder ingredient in a beverage composition. In particular, there are difficulties associated with ensuring full product dissolution (i.e. avoiding sedimentation or separation), sufficient product whitening, desirable tastes and mouthfeel, as well as ensuring that the product quality is maintained. That is, while consumers may be seeking a non-dairy alternative to their cappuccino product, they still wish to ensure that the product resembles a conventional cappuccino and provides a similar experience. In addition, several potential alternative ingredients are associated with their own allergen issues.

Various approaches have already been taken to provide non-dairy beverage whitener- or creamer-containing compositions. In some of these approaches the manufacturer has relied upon small amounts of plant-based protein additives. Such small amounts are relatively easy to solubilise and have a limited impact on the product quality. In order to achieve suitable levels of protein in such products the manufactures often then use blends of different protein sources. However, the commercial message associated with such protein blends is unclear, since the product cannot be readily identified as, for example, an "almond cappuccino".

Other approaches to provide such non-dairy beverages include providing a combined soluble product. That is, the manufacturer provides a spray- or freeze-dried product which has been obtained by drying a homogenised aqueous blend of the required ingredients. The protein ingredient is then held within an emulsion formed with the fat component of the creamer ingredient. This approach allows for good distribution of the non-dairy protein source and aids in the final dissolution and suspension of these ingredients. However, the manufacture of such products is complicated and not suitable in all circumstances.

CN104621311 relates to almond coffee which is characterized by comprising the following components in percentage by weight: 8-15 percent of instant coffee powder, 25-35 percent of non-dairy creamer, 30-50 percent of powdered sugar and 10-25 percent of almond meal.

CN109043090 discloses a production technology of an oligosaccharide solid coffee beverage.

CN109864162 discloses an earthworm protein coffee beverage.

Accordingly, it is desirable to provide a composition for forming a beverage and a method for making the same which tackles at least some of the problems associated with the prior art or, at least, to provide a commercially viable alternative thereto.

In a first aspect there is provided a composition for forming a beverage according to claim 1 appended hereto.

The present invention will now be further described. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

The disclosure relates to a composition for forming a beverage. That is, the disclosure relates to a composition which can be used to form a beverage on dissolution or dispersion in an aqueous medium (generally water or a milk). Typically, the composition is referred to as a coffee mix and, as sugar is present, as a 3-in-1 mix (i.e. coffee, creamer and sweetener). The composition is sold typically in a sachet or stickpack which is emptied by a consumer into their beverage receptacle. Other applications include beverage capsules, cartridges and filter pouches or pads for use in beverage preparation machines, and cups pre-loaded with the composition. On the addition of near-boiling water (i.e. 80-95°C) a beverage is reconstituted. A typical serving will contain about 1.5 to 2g of soluble coffee for reconstitution in 150 to 250ml of water. Preferably the invention provides an individually packaged serving for forming a single beverage.

The composition comprises a mixture of powder ingredients. That is, the ingredients are each provided in a powder form and mixed together. The ingredients remain discrete such that, in principle, the ingredients could be separated by mechanical means, since the ingredients are not intimately formed or agglomerated/adhered together. This is advantageous since the ingredients can be prepared separately and simply mixed together, rather than requiring complex treatment steps or the contamination of expensive equipment with potential allergens. In one aspect discussed below, the dry blended mix can be granulated or agglomerated after forming the mixture to increase the solubility of the powder product. This is advantageous since it excludes complex upstream wet processing and contamination of allergens of these processes

By powder form it is meant that the ingredients are provided as particles and each will have its own particle-size distribution. By way of example, spray-dried coffee will typically have a mean particle size range of 300 microns to 2mm, and freeze-dried coffee will typically have a mean particle size range of 1 to 3mm.

The ingredients include soluble coffee. Soluble coffee powders are well known in the art.

The best known examples are spray and freeze-dried coffee powders. These are made by drying concentrated coffee extracts and therefore a comprised of soluble coffee solids. The powders are reconstituted on the addition of water to form coffee beverages. It is known for such soluble coffee products to contain amounts of added roast and ground coffee, either as part of the particles in the powder, or by loose admixture. The soluble coffee of the present invention may comprise added roast and ground coffee particles, such from 1 to 25wt% roast and ground coffee particles and more preferably from 5 to 15wt% roast and ground coffee particles.

Preferably, by total weight of the ingredients, the composition comprises from 10 to 15wt% of the soluble coffee.

The ingredients include a non-protein creamer. A creamer ingredient is one which provides a fat component. A fine distribution of small globules of the fat in the final beverage have a whitening effect on the appearance of the beverage which is desirable to the consumer. This is intended to emulate the effect of adding milk to a beverage where the dairy fats achieve the same effect. The fat in a non-dairy creamer is generally a vegetable fat, such as palm oil, palm kernel oil or hydrogenated coconut oil. Such a creamer also includes a range of stabilisers and emulsifiers to achieve and stabilise the desired fine distribution of fat globules.

A dairy creamer contains dairy proteins such as whey and casein. These provide a protein source to the beverage and also stabilise the fat in solution. Non-dairy creamer often contains sodium caseinate and may contain another protein source. However, the present disclosure relies upon the use of a non-protein creamer. That is, the creamer powder is substantially and preferably entirely free of protein. By substantially protein free it is meant that there is less than 0.5wt% protein, more preferably less than 0.1wt% protein present in the creamer, more preferably only trace (in the regulatory sense) and most preferable no protein present. Accordingly, the non-protein creamer used in the present disclosure contains as a primary ingredient a source of vegetable fat, together with emulsifiers and stabilisers. The creamer comprises glucose syrup to help capture the emulsion in a dry form. A sweetener (such as sucrose) can optionally be present. Exemplary recipe details for a non-protein creamer are provided below.

Preferably the non-protein creamer comprises a vegetable oil and one or more ingredients selected from thickeners, acidity regulators, and buffering agents, in addition to emulsifiers and stabilisers.

Preferably, by total weight of the ingredients, the composition comprises from 10 to 45wt% of the non-protein creamer.

The ingredients include a plant-based powder selected from one or more powders of oat, coconut, soy and almond. Preferably the plant-based powder includes just one of these powder-types. Providing a single protein source is advantageous from a marketing perspective, but also minimise the risks associated with a range of allergens. Preferably the plant-based powder is a flour. As used herein, the term flour means a finely divided powder obtained by milling a material from the stated source. A flour is therefore a subset of the broader term powder which may encompass small amounts of associated additives, such as stabilisers, or be used to refer to treated flour compositions.

Accordingly, an oat flour is obtained by the milling of oats or a fraction thereof. The oat flour may, optionally, have been treated by enzymes which would mean that commercially it might be referred to as an oat extract or oat based powder. Coconut powder is typically a coconut milk powder. While this is obtained from coconut milk, it typically contains additives to help allow it to be spray-dried. **It** is most preferred that the plant-based powder is an oat flour.

Preferably, by total weight of the ingredients, the composition comprises from 1 to 40wt% of the plant-based powder, preferably 5-12wt%. This is the total amount present of all protein sources. **It** should be appreciated that, although the plant-based powder ingredients are referred to as a protein source, the actual plant-based powder content may not be especially high. For example, oat flour contains about 17% protein.

The plant-based powder is provided to act as the protein source expected with a non-dairy creamer. However, unlike a conventional creamer, the inventors have found that the plant-based powder can be provided as a separate powder in the formulation without compromising the final beverage quality. The plant-based powder is desirably provided in a pure form which has not been mixed with plant foreign ingredients, other than potentially some processing aids.

The plant-based powder is essentially the sole protein source. That is, apart from potentially unavoidable trace amounts in the other ingredients, the only protein is provided by the plant-based powder source. For example, at least 95%, more preferably at least 98% and most preferably 100% of the protein is from the plant-based powder. In addition, as noted above, preferably the composition contains only a single plant-based powder type. Accordingly, unlike known prior art compositions, the composition contains a relatively large amount of a single protein source, such as 5 to 12wt% of oat flour. This is advantageous from a marketing perspective, but also with a view to reducing the complexity of the product recipe and nutritional information.

A ratio by weight of the non-protein creamer powder to plant-based powder is at least 3:1. This ratio has been found to be necessary to minimise the risk that the powder forms clumps or sediment in the beverage. It is considered that the associated emulsifiers and stabilisers in the non-protein creamer help to stabilise the plant-based powder particles. The ratio by weight of the non-protein creamer powder to plant-based powder is at least 3:1, preferably from 3:1 to 8:1 and most preferably from 3:1 to 4:1. The lower thresholds of the range (i.e. more plant-based powder) are required to ensure that there are sufficient stabilisers from the creamer component. For the higher thresholds (i.e. less plant-based powder) there is less plant-based powder present, so the benefits associated with providing the protein source are significantly reduced. The range of 3:1 to 4:1 provides an excellent balance of product stability and sufficient protein content in the composition.

Advantageously the composition of the present invention can be dairy-free and suitable for vegan consumers since it is plant-based. Moreover, since the composition is just a mixture of the powder ingredients, it is possible for the final composition to be prepared without contaminating significant pieces of equipment, such as a spray-dryer, with any plant-derived allergens. The invention provides for a whitened coffee beverage which does not have undesirable sedimentation and provides the consumers expected beverage experience without any undesirable compromises. It is surprising that these benefits can be achieved by simple admixture of the plant-based powder with the other ingredients (i.e. not incorporating it in a combined spray-dried powder obtained from a combined liquid mixture).

In particular, it is believed that the emulsifiers and stabilisers in the non-protein creamer help to stabilise the particles in the plant-based flour, helping them to remain suspended and dispersed. In addition, the soluble coffee particles may act as physical spacers for the flour particles helping to reduce the opportunities for lump formation on reconstitution in a beverage medium. Accordingly, the three component composition achieves a good product quality, despite the plant-based powder being provided as a separate component.

Other ingredients which are present in the composition include sugar. As with the soluble coffee, it is believed that the inclusion of sugar in the composition may act as a physical spacer, helping to reduce the risk of the flour particles clumping and leading to sedimentation.

Preferably, by total weight of the ingredients, the composition comprises up to 75% sugar, such as from 25 to 75% sugar, preferably 40 to 60wt% of the sugar. This is the amount of sugar present as a separate powder ingredient in the mixture and does not include any sugar or sugars which may be present in the other ingredients.

The composition may comprise hydrocolloids, such as xanthan gum, gellan gum or sodium carboxymethylcellulose (CMC) or a mixture thereof. Xanthan gum is a particularly effective stabilise for the composition which can be included in small amounts without compromising the beverage qualities (especially flavour). Xanthan gum may be included in an amount of from 0.08-0.25% of the composition. CMC may be used instead in an amount of from 0.45 to 0.6%. If xanthan gum and CMC are used together then preferably the ratio is from 1:3 to 1:4 of xanthan gum to CMC.

The composition may further comprise a foam-boosting ingredient comprising at least 1ml/g of trapped gas. Such an ingredient is well known in the art and may also be known as a foaming agent or a foam booster. It is known for such ingredients to contain from 1 to 10ml/g, preferably from 2-5ml/g of trapped gas (all measured at ambient pressure). Preferably the foam-boosting ingredient is present in an amount of from 1 to 20wt% by total weight of the ingredients. The presence of such an ingredient is especially preferred for cappuccino formulations (compared to latte formulations) where a foam is desired on the beverage.

The plant-based powder may be provided as a native ingredient (i.e. unprocessed) or it may, where appropriate, be at least partially hydrolysed. The hydrolysation affects how the plant-based powder reacts when added to water, including the likelihood of clump formation and dispersion properties, as well as viscosity increases over time as starch granules swell (i.e. hydrolysed starch granules will swell less or not at all). The requirement to hydrolyse will depend on the nature of the plant-based powder in question. Hydrolysation can be performed with water treatment, optionally in the presence of an enzyme. Preferably the plant-based powder is at least partially hydrolysed and optionally fully hydrolysed. A preferred way to provide a partially hydrolysed plant-based powder is to provide a mixture of hydrolysed (i.e. fully hydrolysed) plant-based powder and native plant-based powder.

Hydrolysation is particularly a consideration for the starch-rich oat flour ingredient. Preferably the plant-based powder is oat flour and wherein a ratio of pre-hydrolysed oat flour to native oat flour is from 5:1 to 3:1. The inventors have surprisingly found that such a ratio provides a composition where the oat flour readily disperses, but also where the beverage forms a stable and reproducible foam. The additional inclusion of a foaming agent with such a formulation provides a cappuccino-type beverage appearance.

According to a further aspect there is provided a method of forming the composition as described herein, the method comprising dry-mixing together the powder ingredients according to claim 11.

Optionally, the method further comprises granulating or agglomerating the mixture of powder ingredients. This provides an agglomerated or granulated beverage composition which is another aspect of the invention.

According to another aspect there is provided a method of forming a beverage, the method comprising mixing the composition as described herein with a beverage medium. Preferably the beverage medium is water at a temperature of from 80 to 95°C.

### Examples

Studies were carried out to examine the dispersibility of different oat powders in hot water and the stability of the oat powder solutions. Under certain circumstances partial gelatinization of starch resulted in lumps (poor dispersibility) and therefore sedimentation occurred (instability).

The following compositions were tested:

| **Recipe** | **Observations** |
|---|---|
| Non-protein creamer 30% | Minimal lumps and stable beverage |
| Coffee 13% | |
| Sugar 52% | |
| Oat flour 5% | |
| Non-protein creamer 25% | Small lumps and minor sediment |
| Coffee 13% | |
| Sugar 52% | |
| Oat flour 10% | |
| Non-protein creamer 20% | Some lumps and sediment |
| Coffee 13% | |
| Sugar 52% | |
| Oat flour 15% | |
| Non-protein creamer 15% | Larger lumps and powdery sediment |
| Coffee 13% | |
| Sugar 52% | |
| Oat flour 20% | |
| Non-protein creamer 10% | Larger lumps and powdery sediment |
| Coffee 13% | |
| Sugar 52% | |
| Oat flour 25% | |

In separate tests the stabilisers provided in the NPC were tested as discrete additives. Surprisingly, the stability benefits of the NPC were not observed for such additions. Moreover, oat flour in isolation from the NPC did not deliver an appealing product from an appearance and texture point of view due to the technical challenges mentioned above, as well as mouthfeel can be too viscous and slimy. Moreover from a taste perspective, it is perceived as having overpowering oat/cereally notes. All these have been improved as part of the development.

The invention will now be described further in relation to the following non-limiting examples.

An exemplary composition was provided having the following composition:

| **Ingredient** | **% of dry composition** |
|---|---|
| Sugar | ~20 |
| Instant Coffee | 10-15 |
| Booster | ~15 |
| Non-protein creamer | ~40 |
| Hydrolysed oat flour | 10-15 |
| Xanthan gum | <1 |
| Flavours | ~1 |
| Salt | <1 |
| Total | 100 |

This was found to provide a desirable cappuccino beverage with a good foam, resembling the quality of a conventional cappuccino product.

An exemplary non-protein creamer is provided below:

| **Ingredient** | **% of dry composition** |
|---|---|
| Glucose syrup | 60-65 |
| Hydrogenated palm kernel oil | ~30 |
| E1450 | ~2 |
| Sugar | ~2 |
| Stabiliser additives E330i, E452i, E466, E551 | The balance |

Unless otherwise stated, all percentages herein are by weight.

## Claims

1. A composition for forming a beverage, the composition comprising a mixture of discrete powder ingredients, the ingredients comprising:
i) soluble coffee;
ii) a non-protein creamer powder;
iii) a plant-based powder selected from one or more of oat powder, coconut powder, soy powder and almond powder; and
iv) sugar powder;
wherein the ratio by weight of the non-protein creamer powder to plant-based powder is at least 3:1;
wherein the non-protein creamer powder comprises a fat component and glucose syrup together with emulsifiers and stabilisers to achieve and stabilise a fine distribution of fat globules; and
wherein the plant-based powder is essentially the sole protein source.

2. The composition according to claim 1, wherein the plant-based powder is one of oat powder, coconut powder, soy powder or almond powder.

3. The composition according to claim 2, wherein the plant-based powder is an oat powder, preferably an oat flour.

4. The composition according to any preceding claim, wherein the ratio by weight of the non-protein creamer powder to plant-based powder is from 3:1 to 8:1, preferably from 3:1 to 4:1.

5. The composition according to any preceding claim, wherein the ingredients comprise by total weight of the ingredients:
from 10 to 15wt% of the soluble coffee; and/or
from 10 to 45wt% of the non-protein creamer powder; and/or
from 40 to 60wt% of the sugar; and/or
from 1 to 40wt% of the plant-based powder, preferably 5-12wt%.

6. The composition according to any of the preceding claims, wherein the ingredients further comprise a foam-boosting ingredient comprising at least 1ml/g of trapped gas, preferably wherein the foam-boosting ingredient is present in an amount of from 1 to 20wt% by total weight of the ingredients.

7. The composition according to any of the preceding claims, wherein the soluble coffee is a spray-dried or freeze-dried coffee powder and, optionally, contains roast and ground coffee particles.

8. The composition according to any of the preceding claims, wherein the non-protein creamer powder comprises a vegetable oil and one or more ingredients selected from thickeners, acidity regulators, and buffering agents.

9. The composition according to any of the preceding claims, wherein the plant-based powder is at least partially hydrolysed and optionally fully hydrolysed.

10. The composition according to any of the preceding claims, wherein the plant-based powder comprises a mixture of hydrolysed plant-based flour and native plant-based flour, preferably wherein the plant-based powder is oat flour and wherein a ratio of pre-hydrolysed oat flour to native oat flour is from 5:1 to 3:1.

11. A method of forming the composition according to any of the preceding claims, the method comprising dry-mixing together the powder ingredients.

12. The method according to claim 11, wherein the method further comprises granulating or agglomerating the mixture of powder ingredients.

13. An agglomerated or granulated beverage composition obtainable by the method of claim 12.

14. A method of forming a beverage, the method comprising mixing the composition according to any of claims 1 to 10 or 13 with a beverage medium.

## Patentansprüche

1. Zusammensetzung zur Herstellung eines Getränks, wobei die Zusammensetzung eine Mischung aus einzelnen Pulverinhaltsstoffen umfasst, die Inhaltsstoffe umfassend:
i) löslichen Kaffee;
ii) ein nicht-proteinhaltiges Kaffeeweißerpulver;
iii) ein Pulver auf pflanzlicher Basis, ausgewählt aus einem oder mehreren von Haferpulver, Kokosnusspulver, Sojapulver und Mandelpulver; und
iv) Zuckerpulver;
wobei das Gewichtsverhältnis des nicht-proteinhaltigen Kaffeeweißerpulvers zu Pulver auf pflanzlicher Basis mindestens 3:1 beträgt;
wobei das nicht-proteinhaltige Kaffeeweißerpulver eine Fettkomponente und Glukosesirup zusammen mit Emulgatoren und Stabilisatoren umfasst, um eine feine Verteilung von Fettkügelchen zu erreichen und zu stabilisieren; und
wobei das Pulver auf pflanzlicher Basis im Wesentlichen die einzige Proteinquelle darstellt.

2. Zusammensetzung nach Anspruch 1, wobei es sich bei dem Pulver auf pflanzlicher Basis um eines von Haferpulver, Kokosnusspulver, Sojapulver oder Mandelpulver handelt.

3. Zusammensetzung nach Anspruch 2, wobei es sich bei dem Pulver auf pflanzlicher Basis um ein Haferpulver, vorzugsweise um ein Hafermehl, handelt.

4. Zusammensetzung nach einem der vorstehenden Ansprüche, wobei das Gewichtsverhältnis des nicht-proteinhaltigen Kaffeeweißerpulvers zu Pulver auf pflanzlicher Basis von 3:1 bis 8:1, vorzugsweise von 3:1 bis 4:1, beträgt.

5. Zusammensetzung nach einem der vorstehenden Ansprüche, wobei die Inhaltsstoffe nach Gesamtgewicht der Inhaltsstoffe umfassen:
von 10 bis 15 Gew.-% des löslichen Kaffees; und/oder
von 10 bis 45 Gew.-% des nicht-proteinhaltigen Kaffeeweißerpulvers; und/oder
von 40 bis 60 Gew.-% des Zuckers; und/oder
von 1 bis 40 Gew.-% des Pulvers auf pflanzlicher Basis, vorzugsweise 5 bis 12 Gew.-%.

6. Zusammensetzung nach einem der vorstehenden Ansprüche, wobei die Inhaltsstoffe ferner einen schaumverstärkenden Inhaltsstoff umfassen, der mindestens 1 ml/g eingeschlossenes Gas enthält, vorzugsweise wobei der schaumverstärkende Inhaltsstoff in einer Menge von 1 bis 20 Gew.-% bezogen auf das Gesamtgewicht der Inhaltsstoffe vorhanden ist.

7. Zusammensetzung nach einem der vorstehenden Ansprüche, wobei es sich bei dem löslichen Kaffee um ein sprühgetrocknetes oder gefriergetrocknetes Kaffeepulver handelt, und das optional Röst- und Mahlkaffeepartikel enthält.

8. Zusammensetzung nach einem der vorstehenden Ansprüche, wobei das nicht-proteinhaltige Kaffeeweißerpulver ein Pflanzenöl und einen oder mehrere Inhaltsstoffe, ausgewählt aus Verdickungsmitteln, Säureregulatoren und Puffermitteln, umfasst.

9. Zusammensetzung nach einem der vorstehenden Ansprüche, wobei das Pulver auf pflanzlicher Basis mindestens teilweise und optional vollständig hydrolysiert ist.

10. Zusammensetzung nach einem der vorstehenden Ansprüche, wobei das Pulver auf pflanzlicher Basis eine Mischung aus hydrolysiertem Mehl auf pflanzlicher Basis und nativem Mehl auf pflanzlicher Basis umfasst, vorzugsweise wobei es sich bei dem Pulver auf pflanzlicher Basis um Hafermehl handelt und wobei ein Verhältnis von vorhydrolysiertem Hafermehl zu nativem Hafermehl von 5:1 bis 3:1 beträgt.

11. Verfahren zum Herstellen der Zusammensetzung nach einem der vorstehenden Ansprüche, wobei das Verfahren das Trockenmischen der pulverförmigen Inhaltsstoffe umfasst.

12. Verfahren nach Anspruch 11, wobei das Verfahren ferner Granulieren oder Agglomerieren der Mischung aus pulverförmigen Inhaltsstoffen umfasst.

13. Agglomerierte oder granulierte Getränkezusammensetzung, erhältlich aus dem Verfahren nach Anspruch 12.

14. Verfahren zum Herstellen eines Getränks, wobei das Verfahren Mischen der Zusammensetzung nach einem der Ansprüche 1 bis 10 oder 13 mit einem Getränkemedium umfasst.

## Revendications

1. Composition permettant de former une boisson, la composition comprenant un mélange d'ingrédients en poudre distincts, les ingrédients comprenant :
i) du café soluble ;
ii) une poudre de succédané de crème non protéiné ;
iii) une poudre à base de plante choisie parmi une ou plusieurs parmi poudre d'avoine, poudre de noix de coco, poudre de soja et poudre d'amande ; et
iv) du sucre en poudre ;
dans laquelle le rapport en poids de la poudre de succédané de crème non protéiné à la poudre à base de plante vaut au moins 3:1 ;
dans laquelle la poudre de succédané de crème non protéiné comprend un composant gras et du sirop de glucose conjointement avec des émulsifiants et des stabilisants pour réaliser et stabiliser une distribution fine de globules gras ; et
dans laquelle la poudre à base de plante est sensiblement la seule source de protéines.

2. Composition selon la revendication 1, dans laquelle la poudre à base de plante est l'une parmi poudre d'avoine, poudre de noix de coco, poudre de soja ou poudre d'amande.

3. Composition selon la revendication 2, dans laquelle la poudre à base de plante est une poudre d'avoine, de préférence de la farine d'avoine.

4. Composition selon l'une quelconque revendication précédente, dans laquelle le rapport en poids de la poudre de succédané de crème non protéiné à la poudre à base de plante va de 3:1 à 8:1, de préférence de 3:1 à 4:1.

5. Composition selon l'une quelconque revendication précédente, dans laquelle les ingrédients comprennent en poids total des ingrédients :
de 10 à 15 % en poids du café soluble ; et/ou
de 10 à 45 % en poids de la poudre de succédané de crème non protéiné ; et/ou
de 40 à 60 % en poids du sucre ; et/ou
de 1 à 40 % en poids de la poudre à base de plante, de préférence 5 à 12 % en poids.

6. Composition selon l'une quelconque des revendications précédentes, dans laquelle les ingrédients comprennent en outre un ingrédient renforçateur de mousse comprenant au moins 1 ml/g de gaz piégé, de préférence dans laquelle l'ingrédient renforçateur de mousse est présent en une quantité allant de 1 à 20 % en poids par rapport au poids total des ingrédients.

7. Composition selon l'une quelconque des revendications précédentes, dans laquelle le café soluble est une poudre de café séchée par atomisation ou lyophilisée et, facultativement, contient des particules de café torréfié et moulu.

8. Composition selon l'une quelconque des revendications précédentes, dans laquelle la poudre de succédané de crème non protéiné comprend une huile végétale et un ou plusieurs ingrédients choisis parmi épaississants, régulateurs d'acidité et agents tampons.

9. Composition selon l'une quelconque des revendications précédentes, dans laquelle la poudre à base de plante est au moins partiellement hydrolysée et, facultativement, complètement hydrolysée.

10. Composition selon l'une quelconque des revendications précédentes, dans laquelle la poudre à base de plante comprend un mélange de farine à base de plante hydrolysée et de farine à base de plante native, de préférence dans laquelle la poudre à base de plante est de la farine d'avoine et dans laquelle un rapport de la farine d'avoine préhydrolysée à la farine d'avoine native va de 5:1 à 3:1.

11. Procédé de formation de la composition selon l'une quelconque des revendications précédentes, le procédé comprenant le mélange à sec conjoint des ingrédients en poudre.

12. Procédé selon la revendication 11, dans lequel le procédé comprend en outre la granulation ou l'agglomération du mélange d'ingrédients en poudre.

13. Composition de boisson agglomérée ou granulée pouvant être obtenue par le procédé selon la revendication 12.

14. Procédé de formation d'une boisson, le procédé comprenant le mélange de la composition selon l'une quelconque des revendications 1 à 10 ou 13 avec un milieu de boisson.
